# FASCICULE DE BREVET EUROPEEN

(11) **EP 0 433 101 B1**
(45) Date de publication et mention de la délivrance du brevet: **06.09.1995**
(21) Numéro de dépôt: 90402870.1
(22) Date de dépôt: 15.10.1990
(51) Int. Cl.: G01T 1/29, G01T 5/08

(54) **Dispositif de détection linéaire de rayonnement**
Lineare Strahlungssonde
Linear radiation detector

(30) Priorité: 17.10.1989 FR 8913547
(43) Date de publication de la demande: 19.06.1991
(73) Titulaire: COMMISSARIAT A L'ENERGIE ATOMIQUE, 75015 Paris (FR)
(72) Inventeur: Bourdinaud, Michel, F-91440 Bures Sur Yvette (FR); Laguesse, Michel, B-4102 Ougree (BE)
(74) Mandataire: Signore, Robert

(56) Documents cités:
- EP-A- 0 271 723
- EP-A- 0 377 825
- FR-A- 2 552 887
- US-A- 4 806 757
- US-A- 4 880 987
- IBM TECHNICAL DISCLOSURE BULLETIN, vol. 16, no. 9, février 1974, page 3102, New York, US; R.W. DREYFUS: "Image intensifier"
- NUCLEAR INSTRUMENTS & METHODS IN PHYSICS RESEARCH, vol. 228, nos. 2/3, janvier 1985, pages 303-308, Elsevier Science Publishers B.V., Amsterdam, NL; H. FESSLER et al.: "A tower structured scintillator-leas photon calorimeter using a novel fiber optics readout system"

## Description

La présente invention concerne un dispositif de détection de rayonnement.

Par "rayonnement", on entend notamment un rayonnement X ou un rayonnement gamma ou même un rayonnement constitué par des électrons de grande énergie.

L'invention trouve des applications dans de nombreux domaines, notamment en physique (radio-cristallographie ...), dans le domaine médical (radiographie, tomographie, angiographie ...), dans le domaine industriel (détection de défauts, inspection de soudures ...) et dans le domaine de la sécurité (contrôle de bagages ...).

On connaît déjà divers dispositifs de détection de rayonnement.

Ainsi une plaque photographique associée à un écran renforçateur a-t-elle lontemps constitué le seul moyen pour réaliser l'acquisition et la visualisation d'images X. Cette technique est d'ailleurs actuellement encore en usage mais est progressivement remplacée depuis peu par des systèmes réalisant l'acquisition d'une image X sous forme numérique afin de pouvoir la visualiser en temps réel, sans nécessiter l'étape de développement et de fixation qu'exigent les systèmes photographiques traditionnels.

Plusieurs systèmes permettant l'acquisition d'une image X sous forme numérique sont déjà connus mais présentent des inconvénients :

Les chambres à fils, par exemple commercialisées par la société Schlumberger, ont une efficacité de détection qui est limitée à environ 25%. Une telle efficacité ne s'obtient d'ailleurs qu'avec une chambre assez volumineuse. La résolution spatiale de ces chambres n'est pas très bonne (de l'ordre de quelques millimètres). De plus, ces chambres sont remplies de gaz (l'argon ou le xénon par exemple) dont la pollution progressive est gênante, les chambres nécessitant un système de recyclage qui est encombrant.

Les systèmes, par exemple commercialisés par la société Thomson, comportant des photodiodes qui sont associées en barrettes au pas de 1 ou 0,5 mm et qui sont précédées par un scintillateur constitué par une couche d'environ 0,3 mm de Gd₂O₂S, ont une mauvaise efficacité de détection au-delà de 100 keV étant donné la faible épaisseur du scintillateur. Cette épaisseur ne peut cependant pas être accrue sans prendre le risque de déteriorer la résolution spatiale. De plus, ce scintillateur présente une atténuation non négligeable des photons visibles.

Les amplificateurs de brillance, par exemple commercialisés par les sociétés Philips et Thomson, constituent des capteurs bidimensionnels, ce qui peut être avantageux dans certains cas, car aucun système de balayage externe n'est nécessaire. Cependant, ces amplificateurs de brillance présentent plusieurs inconvénients, à savoir une grande sensibilité aux rayons X diffusés par un objet à analyser et une dynamique limitée et, finalement, la nécessité d'un compromis entre la résolution et le pouvoir d'arrêt de ces amplificateurs de brillance.

La présente invention concerne un dispositif de détection de rayonnement qui, contrairement aux dispositifs connus, mentionnés précédemment, présente à la fois une grande efficacité de détection et une bonne résolution spatiale.

A cet effet, la présente invention utilise une plaque mince d'un matériau scintillateur dense, le rayonnement à détecter pénétrant dans la plaque suivant la tranche de celle-ci, la profondeur de la plaque suivant la direction du rayonement étant suffisante pour permettre l'arrêt de la majeure partie du rayonnement qui a pénétré dans la plaque.

Ainsi la faible épaisseur du matériau scintillateur permet une bonne résolution spatiale et sa grande profondeur, comptée suivant la direction du rayonnement incident, permet une grande efficacité de détection.

On connaît, par EP-A-0 377 825 (HOESCHST AG), cité au titre de l'Art.54(3) CBE, un détecteur de rayonnement comportant une plaque qui absorbe le rayonnement et au moins un guide d'onde optique qui contient un matériau fluorescent et qui est fixé à la plaque et disposé parallèlement à la surface de celle-ci. On obtient ainsi une très grande surface sensible et la détection du rayonnement est possible des deux côtés de la plaque.

De façon précise, la présente invention a pour objet un dispositif de détection d'un faisceau de rayonnement conformément à la revendication 1.

Selon un premier mode de réalisation particulier, ce dispositif comprend en outre : des moyens de collimation du faisceau, ces moyens de collimation étant aptes à imposer au faisceau une orientation parallèle à la plaque et auxdites portions de fibres, de façon que ce faisceau pénètre dans la plaque par la tranche de celle-ci.

Selon un deuxième mode de réalisation particulier, ce dispositif comprend en outre : des moyens de déplacement relatif de la plaque par rapport au faisceau incident, le dispositif formant, grâce au déplacement relatif, un détecteur bidimensionnel.

Selon un troisième mode de réalisation particulier, ce dispositif comprent en outre :
- pour chaque fibre, un moyen de détection de la lumière de fluorescence produite et guidée par cette fibre lorsqu'elle est excité, et
- des moyens électroniques de traitement des signaux fournis par les moyens de détection.

Dans une configuration particulière, lesdites portions fixées à la plaque sont des portions d'extrémité des fibres.

Selon un premier mode de réalisation particulier de l'invention, l'autre face de la plaque est rendue réflectrice ou diffusante pour la lumière émise par le marteau scintillateur sous l'impact du rayonnement.

Selon un deuxième mode de réalisation particulier, le dispositif de l'invention comprend deux plaques minces du matériau scintillateur, qui encadrent l'ensemble formé par lesdites portions des fibres.

Selon un troisième mode de réalisation particulier, le dispositif de l'invention comprend deux groupes de fibres optiques fluorescentes, l'ensemble formé par lesdites portions des fibres de l'un des groupes et l'ensemble formé par lesdites portions des fibres de l'autre groupe encadrant la plaque de matériau scintillateur de préférence, lesdites portions de l'un des ensembles sont placées en quinconce vis-à-vis desdites portions de l'autre ensemble : ces ensembles sont décalés l'un par rapport à l'autre de telle façon qu'en observant la plaque par la tranche, les axes desdites portions des fibres forment les sommets d'une ligne en zigzag.

Dans une réalisation particulière de l'invention, la plaque de matériau scintillateur a une structure isotrope.

Dans une autre réalisation particulière de l'invention, la plaque est apte à guider la lumière visible qui est émise par le matériau scintillateur sous l'impact du rayonnement, de façon sensiblement perpendiculaire aux faces de la plaque, vers les fibres, la structure de la plaque étant alors anisotrope.

Dans une réalisation particulière correspondant à une telle structure anisotrope, la plaque de matériau scintillateur a une structure en piliers, ces piliers sont orientés perpendiculairement aux faces de la plaque, sont disposés suivant des rangées parallèles et sont aptes à guider la lumière visible émise par le matériau scintillateur sous l'impact du rayonnement, et lesdites portions des fibres sont disposées parallèlement à ces rangées et perpendiculairement aux piliers.

Enfin, de préférence, le matériau scintillateur dense est inorganique. Il est par exemple à base d'iodure de césium.

En effet, un matériau scintillateur organique tel que le polystyrène par exemple, est caractérisé par un trop faible pouvoir d'arrêt des photons X, ce qui conduit à une faible efficacité de détection ; de plus, dès que l'énergie d'un photon X dépasse 20 keV l'interaction par effet Compton dans le polystyrène devient plus probable que l'interaction par effet photoélectrique et la diffusion des photons secondaires qui en résulte provoque une perte de résolution.

Dans la présente invention, on peut par exemple utiliser en tant que matériau scintillateur du CsI(Tl), qui est peu hygroscopique et qui a l'avantage d'avoir une bonne efficacité de conversion et une densité importante, conduisant à un pouvoir d'arrêt suffisant, et un effet Compton qui n'est prédominant qu'au-delà de 300 keV.

On peut également utiliser le matériau scintillateur CsI(Na) qui a un spectre d'émission différent mais est hygroscopique.

La présente invention sera mieux comprise à la lecture de la description suivante, d'exemples de réalisation donnés à titre purement indicatif et nullement limitatif, en référence aux dessins annexés sur lesquels :
- la figure 1 est une vue schématique d'un dispositif conforme à l'invention, utilisant une plaque de matériau scintillateur de structure isotrope,
- la figure 1A est une vue schématique d'un dispositif conforme à l'invention, comportant des fentes de collimation,
- la figure 2 illustre schématiquement une application du dispositif représenté sur la figure 1 au contrôle de bagages,
- les figures 3 et 4 sont des vues schématiques d'autres modes de réalisation particuliers utilisant encore une plaque de matériau scintillateur de structure isotrope, et
- les figures 5 et 6 illustrent schématiquement d'autres modes de réalisation de l'invention, utilisant une plaque de matériau scintillateur de structure anisotrope.

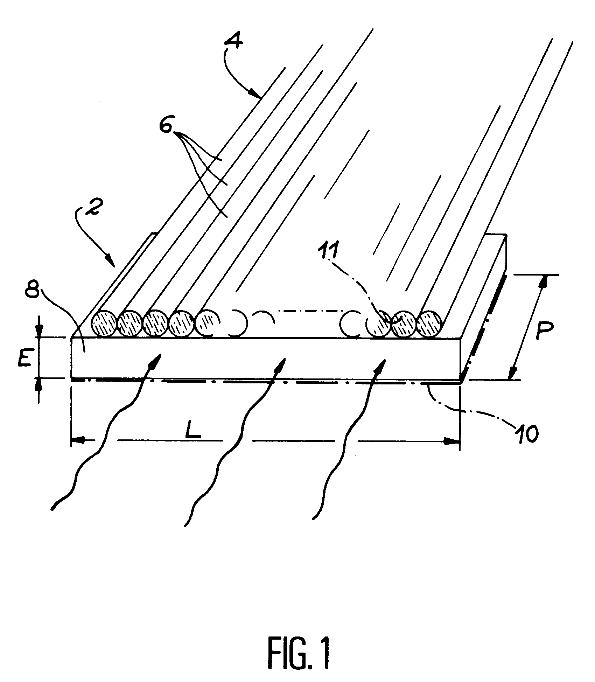

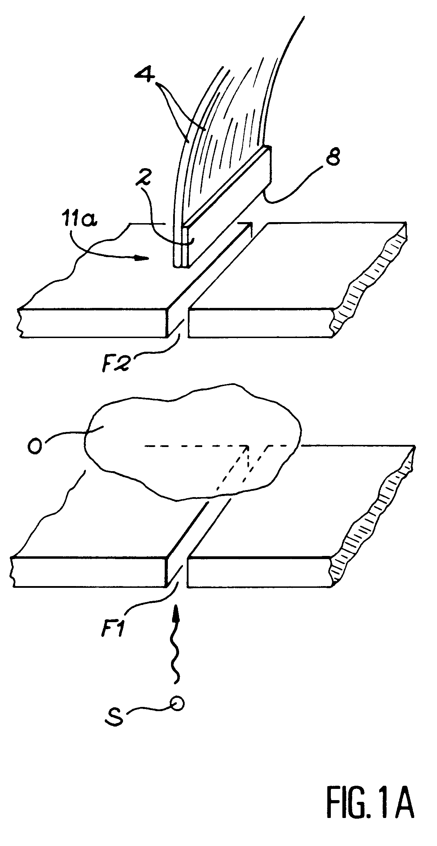

Le dispositif conforme à l'invention, qui est schématiquement représenté sur la figure 1 est destiné à détecter un rayonnement, par exemple un rayonnement X ou un rayonnement gamma, et comprend à cet effet une plaque mince 2, de structure isotrope, d'un matériau scintillateur dense, apte à émettre une lumière visible sous l'impact du rayonnement.

Le dispositif représenté sur la figure 1 comprend aussi une pluralité de fibres optiques fluorescentes 4, par exemple des fibres optiques plastiques fluorescentes (à gaine optique et coeur en plastique, le coeur étant fluorescent), dont des portions respectives 6, par exemple des portions d'extrémité, sont parallèles, placées les une contre les autres et fixées sur une face de la plaque 2, parallèlement à la longueur ou à la largeur de celle-ci, ces portions formant ainsi une sorte de tapis placé contre l'une des faces de la plaque 2.

On choisit des fibres fluorescentes qui sont excitables par la lumière visible émise par le scintillateur sous l'impact du rayonnement.

Etant donné un faisceau du rayonnement à détecter, de direction déterminée, on dispose la plaque parallèlement à cette direction, de telle façon que lesdites portions 6 des fibres 4, portions qui sont fixées à la plaque, soient parallèles à la direction du faisceau, le rayonnement pénétrant ainsi dans la plaque par la tranche 8 de celle-ci.

On choisit une plaque 2 ayant une profondeur P, selon la direction du faisceau, variable selon l'énergie des photons, mais suffisante pour que la plaque soit capable d'arrêter l'essentiel du rayonnement incident.

Sous l'impact de ce dernier, le scintillateur émet une lumière visible qui excite le matériau fluorescent avec lequel est dopé le coeur des fibres 4.

En fait, étant donné un point d'impact d'une particule (photon pour un rayonnement X ou gamma) du rayonnement, seulement une ou quelques fibres voisines sont excitées par la lumière visible résultante et l'on peut ainsi localiser ce point d'impact en analysant la lumière de fluorescence dont une partie est guidée jusqu'à une extrémité de chaque fibre (extrémité opposée à celle qui est fixée à la plaque dans l'exemple représenté sur la figure 1).

On dispose ainsi d'un détecteur linéaire permettant la localisation des particules du rayonnement. Ce sont les fibres 4 du détecteur qui assurent cette fonction de localisation.

En vue d'augmenter le nombre de photons de scintillation reçus par chaque fibre, on peut rendre réflectrice ou diffusante vis-à-vis de la lumière émise par le scintillateur, la face de la plaque 2, opposée à celle qui porte lesdites portions des fibres, portions qui sont fixées à la plaque. A cet effet, on peut par exemple recouvrir cette face opposée d'une couche 10 d'aluminium.

A titre purement indicatif et nullement limitatif, on utilise des fibres fluorescentes, dont la gaine optique a un diamètre de l'ordre de 1 mm ou de 0,5 mm et une plaque mince de CsI(Tl), de forme rectangulaire et lesdites portions des fibres fluorescentes sont disposées parallèlement à la largeur de la plaque ; la longueur L de cette plaque est de l'ordre de quelques dizaines de centimètres et son épaisseur E est de l'ordre de quelques dixièmes de millimètre ; la largeur, ou profondeur P dans le cas présent, est quant à elle de l'ordre de 2 à 3 cm pour la détection de photons X et de l'ordre de 5 à 6 cm pour la détection de photons gamma, ce qui donne à la plaque un très grand pouvoir d'arrêt (proche de 100% pour les photons X jusqu'à 300 keV), le dispositif conservant cependant une bonne résolution spatiale, voisine de 0,5 mm, du fait de la faible épaisseur de la plaque.

En utilisant le dispositif de détection avec une source de rayonnement (par exemple X) munie d'une ou d'une pluralité de fentes de collimation, le dispositif présente l'intérêt d'être très peu sensible aux photons X diffusés par l'objet à analyser.

Ces fentes de collimation peuvent être disposées entre l'objet à analyser et la source de rayonnement et/ou entre cet objet et le dispositif de détection.

A titre d'exemple, on voit sur la figure 1A une source de rayonnement S, un dispositif 11a du genre de celui qui est représenté sur la figure 1 et un objet à analyser 0, disposé entre la source S et le dispositif 11a; une fente de collimation F1 et une fente de collimation F2 sont respectivement disposées entre la source S et l'objet 0 et entre ce dernier et le dispositif 11a; les fentes F1, F2 et la tranche 8 de la plaque du dispositif 11a, par laquelle pénètre le rayonnement sont parallèles et "alignées" (placées en vis-à-vis), comme on le voit sur la figure 1A, et les fentes F1 et F2 sont fixes par rapport au dispositif 11a.

La fente située entre l'objet et le dispositif de détection (fente F2 dans l'exemple de la figure 1A) n'est cependant pas indispensable car le dispositif de détection est autocollimaté de par son principe de réalisation.

Le dispositif, muni d'un système électronique permettant la lecture indépendante et en temps réel, des informations fournies par chacune des fibres du tapis, peut réaliser l'acquisition d'images X ou gamma sous forme numérique.

Selon l'application, la lecture peut être réalisée à une seule des extrémités de chaque fibre ou à chacune de ces extrémités (les portions de fibres fixées à la plaque scintillatrice étant alors prolongées de part et d'autre par des portions de transport des signaux optiques).

En utilisant une plaque de grande longueur L ou bien plusieurs dispositifs dont les plaques respectives sont placées les unes à côté des autres de telle façon que leurs longueurs L s'ajoutent, on peut faire l'acquisition d'images de grandes dimensions. Dans ce dernier cas, les plaques peuvent être distribuées suivant une ligne polygonale centrée sur la source de rayonnement (par exemple un tube X), afin d'éviter l'effet de parallaxe.

Comme système de lecture, on peut utiliser un système comprenant successivement, à la suite des fibres fluorescentes, un intensificateur d'image auquel aboutissent les extrémités des fibres, opposées à celles qui sont du côté de la plaque dans l'exemple de la figure 1, un système de réduction de section (ou "taper" dans les publications en langue anglaise) et un dispositif à transfert de charges (matrice de diodes CCD) permettant d'intégrer, durant un certain temps, le signal lumineux fourni par chaque fibre.

Le gain de l'intensificateur d'image est ajustable en fonction de l'objet à analyser : on augmente ce gain lorsque l'objet est très opaque et on diminue le gain lorsqu'il l'est moins. Ceci permet de stocker le maximum de charges dans la matrice CCD pour chaque photon X ou gamma incident, tout en restant cependant toujours en deçà de la saturation du système. L'imprécision due à la "statistique" des charges collectées dans chaque puits CCD est alors minimale.

Dans l'exemple de la figure 1, les faces des extrémités des fibres fixées sur le scintillateur peuvent être rendues réflectrices ou diffusantes vis-à-vis de la lumière guidée dans ces fibres, dans le but d'augmenter le signal reçu par le système de lecture. A cet effet, on peut par exemple recouvrir ces faces d'une couche 11 d'aluminium.

Bien entendu, comme le dispositif de détection est de type linéaire, des moyens de balayage sont nécessaires pour reconstituer une image en deux dimensions. Par exemple, dans certaines applications, l'objet à analyser se déplace par rapport au dispositif de détection et à la source de rayonnement, ceux-ci étant fixes l'un par rapport à l'autre. Dans d'autres applications, le dispositif de détection se déplace par rapport à la source de rayonnement, l'objet pouvant alors être fixe ou mobile.

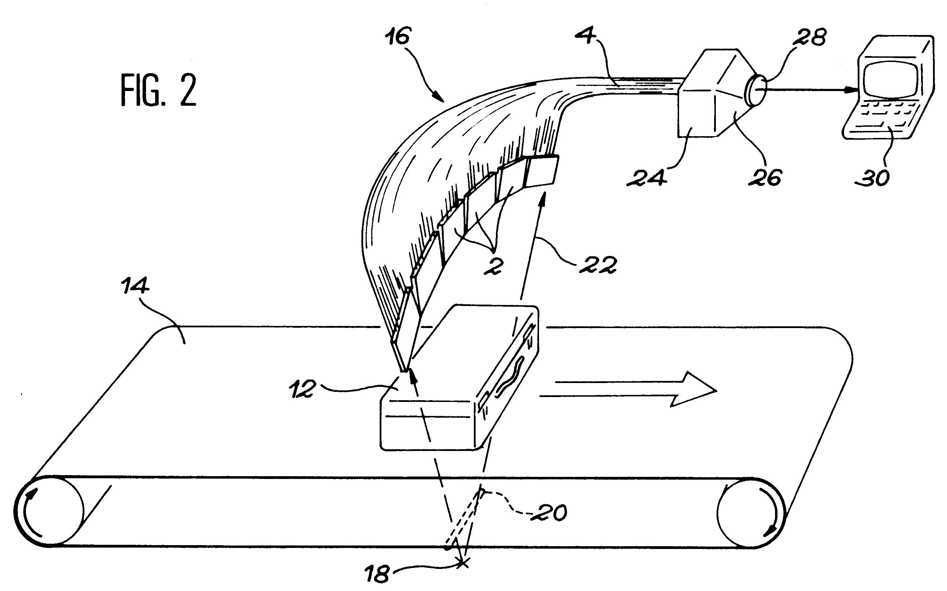

La figure 2 illustre schématiquement une application de l'invention au contrôle de bagages 12 qui défilent, sur un tapis roulant 14, devant un dispositif de détection 16 conforme à l'invention, un seul bagage étant représenté sur la figure 2.

Une source ponctuelle 18 de rayons X est placée sous le tapis roulant 14 (fait d'un matériau transparent aux rayons X), en regard du dispositif 16. Cette source est munie d'un collimateur 20 à fente rectiligne et orientée perpendiculairement à la direction de défilement des bagages, et permet ainsi d'obtenir un faisceau de rayons X en forme d'éventail 22 qui traverse un bagage 12 arrivant au niveau de la source.

Le dispositif 16 comprend une pluralité de dispositifs élémentaires du genre de celui qui a été décrit en faisant référence à la figure 1, les plaques respectives 2 de ces dispositifs élémentaires étant disposées côte à cote en arc de cercle, au-dessus du tapis roulant 14, perpendiculairement à la direction de défilement des bagages, de façon que le faisceau en éventail 22 "tombe" sur les tranches juxtaposées des plaques 2 de matériau scintillateur.

On voit également sur la figure 2 l'un des systèmes électroniques de lecture du dispositif de détection 16 susceptible d'être utilisé. Ce système comprend successivement un intensificateur d'image 24, un système de réduction de section ou "taper" 26 et une matrice CCD 28 qui est reliée à des moyens 30 de traitement et de visualisation permettant de voir les objets susceptibles d'être présents dans les bagages.

Le schéma d'application de la figure 2 fait apparaître un avantage du dispositif de l'invention : il permet la réalisation d'un détecteur dont la partie électronique est complètement déportée en dehors du faisceau de rayonnement.

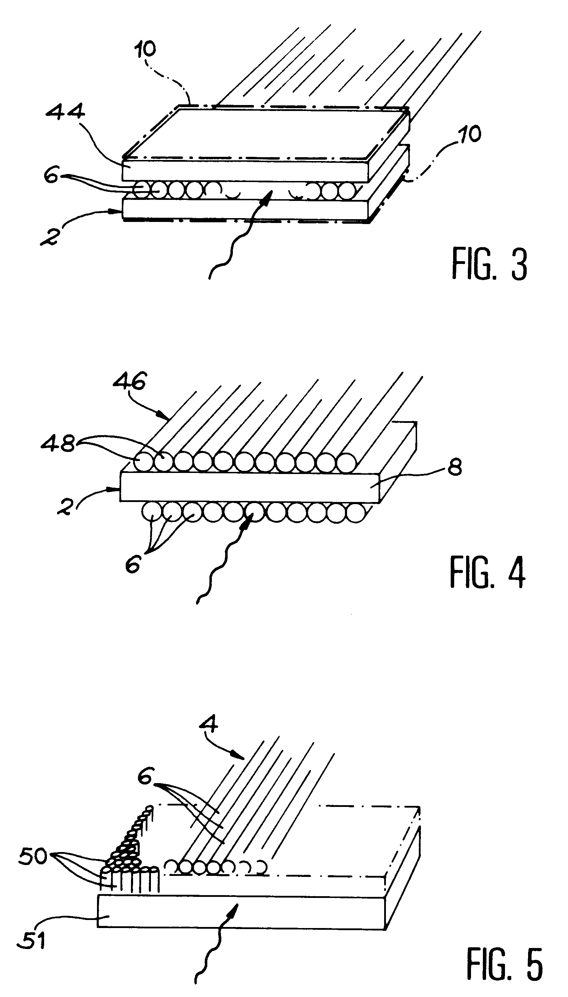

Le dispositif conforme à l'invention, qui est schématiquement représenté sur la figure 3, diffère de celui qui est représenté sur la figure 1 par le fait qu'il comprend en outre une autre plaque mince 44 de materiau scintillateur, qui est identique à la plaque 2 et fixée aux portions 6 des fibres de telle façon que ces dernières soient encadrées par les plaques minces 2 et 44.

On augmente ainsi le coefficient d'utilisation de la source de rayonnement (tube générateur de rayons X par exemple).

Le dispositif conforme à l'invention, qui est schématiquement représenté sur la figure 4, diffère de celui qui est représenté sur la figure 1 par le fait qu'il comprend en outre un autre ensemble de fibres optiques plastiques fluorescentes 46, dont des portions respectives 48 sont parallèles, placées les unes contre les autres et fixées, parallèlement aux portions 6, sur la face de la plaque 2, opposée à celle qui porte ces portions 6, ces dernières et les portions 48 étant placées en quinconce : elles sont décalées les unes par rapport aux autres de sorte qu'en observant le dispositif par la tranche, les axes des portions 6 et 48 forment les sommets d'une ligne en zigzag. Ce dispositif présente l'avantage d'améliorer la résolution spatiale.

Bien entendu, dans ce cas, la face de la plaque, qui porte les portions 48, n'est pas aluminisée.

Avec le dispositif représenté sur la figure 4, on peut utiliser le système de lecture représenté sur la figure 2, toutes les fibres 4 et 46 aboutissant à l'intensificateur d'image.

Dans l'invention, on peut utiliser des fibres dont les portions fixées à la plaque de matériau scitillateur ont une section circulaire ou une section sensiblement carrée.

Par ailleurs, au lieu d'utiliser une plaque de structure isotrope, on peut utiliser une plaque de structure anisotrope qui envoie préférentiellement la lumière visible de scintillation de façon sensiblement perpendiculaire aux faces de cette plaque.

Pour ce faire, on peut utiliser (figure 5) une plaque mince 50 comportant un substrat 51 et, sur ce substrat, des rangées parallèles et adjacentes de piliers, ou aiguilles, de CsI(Tl) par exemple cylindriques, qui sont perpendiculaires aux faces de la plaque 50 (c'est-à-dire orientés suivant l'épaisseur de la plaque) et donc perpendiculaires à la direction du rayonnement incident.

Une telle plaque est réalisable par des techniques de dépôt particulières. A ce sujet, on pourra notamment se référer à l'article de K. OBA et al. intitulé "A CsI(Na) scintillation plate with high spatial resolution" et publié dans la revue Advances in electronics and electron physics, vol.74 (1988) pp.247 à 255.

La hauteur des piliers ne dépasse pas une valeur de l'ordre de vingt fois le diamètre de ces piliers. A titre d'exemple, on réalise des piliers dont le diamètre est de l'ordre de 25 micromètres et dont la hauteur est de l'ordre de 0,5 mm.

On notera que les portions des fibres fluorescentes fixées sur la plaque sont parallèles aux rangées de piliers et perpendiculaires à ces piliers.

L'avantage du dispositif de la figure 5 est qu'il conduit à un très faible intercouplage et que le nombre de photoélectrons en bout de chaîne de réception (matrice CCD) est plus élevé que dans la configuration utilisant une plaque de matériau scintillateur de structure isotrope.

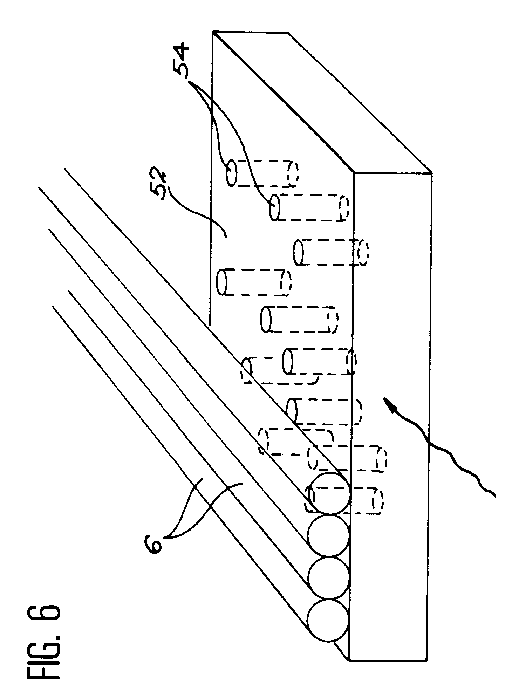

On a représenté schématiquement sur la figure 6 un autre dispositif conforme à l'invention, dont la plaque mince de matériau scintillateur 52 a encore une structure anisotrope conduisant à une émission de lumière visible de scintillation préférentiellement suivant une direction sensiblement perpendiculaire aux faces de la plaque 52.

Pour ce faire, on utilise une plaque mince 52 de CsI(Tl) comportant un certain nombre de lignes de déviation de lumière 54, constituées par de petits cylindres minces juxtaposés et perpendiculaires aux faces de la plaque 52 dans laquelle ces cylindres créent des discontinuités optiques.

Les lignes de déviation 54 sont par exemple obtenues en bombardant la plaque 52 par des ions lourds perpendiculairement aux faces de la plaque 52. A cet effet, on utilise par exemple des ions de Xénon de 5 MeV par nucléon.

Sur les traces du bombardement, la matière du scintillateur devient amorphe et, de ce fait, est susceptible de modifier le trajet d'un rayon lumineux pour orienter ce dernier de façon sensiblement perpendiculaire aux faces de la plaque lorsqu'il sort de celle-ci.

## Revendications

1. Dispositif de détection d'un faisceau de rayonnement de type déterminé, choisi parmi les rayonnements X, les rayonnements gamma et les rayonnements constitués d'électrons de grande énergie, dispositif comprenant :
- au moins une plaque mince (2, 44, 50, 52) d'un matériau scintillateur dense, cette plaque ayant une profondeur suffisante pour arrêter la majeure partie du rayonnement qui a pénétré dans la plaque par la tranche de celle-ci,
- au moins un groupe de fibres optiques fluorescentes (4, 46), excitables par la lumière visible émise par le matériau scintillateur sous l'impact du rayonnement, ces fibres ayant des portions (6, 48) parallèles, adjacentes et fixées à l'une des deux faces de la plaque, le dispositif permettant la localisation, suivant la tranche de la plaque, de l'impact des particules du rayonnement incident.

2. Dispositif selon la revendication 1, caractérisé en ce qu'il comprend en outre : des moyens (20) de collimation du faisceau, ces moyens de collimation étant aptes à imposer au faisceau une orientation parallèle à la plaque et auxdites portions de fibres, de façon que ce faisceau pénètre dans la plaque par la tranche de celle-ci.

3. Dispositif selon la revendication 1, caractérisé en ce qu'il comprend en outre : des moyens (14) de déplacement relatif de la plaque par rapport au faisceau incident, le dispositif formant, grâce au déplacement relatif, un détecteur bidimensionnel.

4. Dispositif selon la revendication 1, caractérisé en ce qu'il comprend en outre :
- pour chaque fibre, un moyen (28) de détection de la lumière de fluorescence produite et guidée par cette fibre lorsqu'elle est excitée, et
- des moyens électroniques de traitement des signaux fournis par les moyens de détection.

5. Dispositif selon l'une quelconque des revendications 1 à 4, caractérisé en ce que l'autre face de la plaque est rendue réflectrice ou diffusante pour la lumière émise par le matériau scintillateur sous l'impact du rayonnement.

6. Dispositif selon l'une quelconque des revendications 1 à 4, caractérisé en ce qu'il comprend deux plaques minces (2, 44) du matériau scintillateur, qui encadrent l'ensemble formé par lesdites portions (6) des fibres.

7. Dispositif selon l'une quelconque des revendications 1 à 4, caractérisé en ce qu'il comprend deux groupes de fibres optiques fluorescentes (4, 46), l'ensemble formé par lesdites portions des fibres de l'un des groupes et l'ensemble formé par lesdites portions des fibres de l'autre groupe encadrant la plaque de matériau scintillateur.

8. Dispositif selon la revendication 7, caractérisé en ce que lesdites portions de l'un des ensembles sont placées en quinconce vis-à-vis desdites portions de l'autre ensemble.

9. Dispositif selon l'une quelconque des revendications 1 à 8, caractérisé en ce que la plaque (2, 44) de matériau scintillateur a une structure isotrope.

10. Dispositif selon l'une quelconque des revendications 1 à 8, caractérisé en ce que la plaque (50, 52) de matériau scintillateur est apte à guider la lumière visible qui est émise par le matériau scintillateur sous l'impact du rayonnement, de façon sensiblement perpendiculaire aux faces de la plaque.

11. Dispositif selon la revendication 10, caractérisé en ce que la plaque (50) de matériau scintillateur a une structure en piliers, en ce que ces piliers sont orientés perpendiculairement aux faces de la plaque, sont disposés suivant des rangées parallèles et sont aptes à guider la lumière visible émise par le matériau scintillateur sous l'impact du rayonnement, et en ce que lesdites portions des fibres sont disposées parallèlement à ces rangées et perpendiculairement aux piliers.

12. Dispositif selon l'une quelconque des revendications 1 à 11, caractérisé en ce que le matériau scintillateur dense est inorganique.

13. Dispositif selon la revendication 12, caractérisé en ce que le matériau scintillateur dense est à base d'iodure de césium.

14. Dispositif selon l'une quelconque des revendications 1 à 13, caractérisé en ce que l'épaisseur de la plaque est suffisamment faible pour avoir une bonne résolution spatiale pour le dispositif.

15. Dispositif selon l'une quelconque des revendications 1 à 13, caractérisé en ce que l'épaisseur de la plaque est sensiblement égale au diamètre des fibres optiques, la résolution spatiale du dispositif étant ainsi sensiblement égale au diamètre des fibres optiques.

## Patentansprüche

1. Sonde für eine Strahlung bestimmter Art, ausgewählt unter den Röntgenstrahlen, den Gammastrahlen und den Strahlen aus hochenergetischen Elektronen, umfassend:
- wenigstens eine dünne Platte (2, 44, 50, 52) aus einem dichten schimmernden Material, wobei diese Platte eine ausreichend große Tiefe hat, um den größten Teil der Strahlung aufzuhalten, die in die Platte eingedrungen ist durch den Rand von dieser,
- wenigstens eine Gruppe von Lichtleitfasern (4, 46), erregbar durch das durch das schimmernde Material unter der Einwirkung der Strahlung emittierte sichtbare Licht, wobei diese Fasern Abschnitte (6, 48) haben, die parallel, nebeneinanderliegend und an einer der beiden Seiten der Platte befestigt sind und die Vorrichtung dabei die Lokalisierung, dem Rand der Platte entsprechend, des Auftreffens der einfallenden Strahlungsteilchen ermöglicht.

2. Sonde nach Anspruch 1, dadurch gekennzeichnet, daß sie außerdem umfaßt: Kollimationseinrichtungen (20) des Strahlenbündels, wobei diese Kollimationseinrichtungen dem Strahlenbündel eine Orientierung parallel zu der Platte und zu den genannten Faserabschnitten aufzuwingen können, so daß dieses Strahlenbündel in die Platte eindringt durch den Rand von dieser.

3. Sonde nach Anspruch 1, dadurch gekennzeichnet, daß sie außerdem umfaßt: Relativverschiebungseinrichtungen 14 der Platte in bezug auf das einfallende Stahlenbündel, wobei die Sonde dank der Relativverschiebung einen zweidimensionalen Detektor bildet.

4. Sonde nach Anspruch 1, dadurch gekennzeichnet, daß sie außerdem umfaßt:
- für jede Faser eine Einrichtung (28) zur Detektion des Fluoreszenzlichts, erzeugt und geleitet durch diese Faser, wenn sie erregt bzw. angeregt wird, und
- elektronische Einrichtungen zur Verarbeitung der durch die Detektionseinrichtungen gelieferten Signale.

5. Sonde nach einem der Ansprüche 1 bis 4, dadurch gekennzeichnet, daß die andere Seite der Platte reflektierend oder diffundierend gemacht wird für das durch das schimmernde Material unter der Einwirkung der Strahlung emittierte Licht.

6. Sonde nach einem der Ansprüche 1 bis 4, dadurch gekennzeichnet, daß sie zwei dünne Platten (2, 44) aus schimmerndem Material umfaßt, die die durch die nebeneinanderliegenden Abschnitte (6) der Fasern gebildete Gruppe einrahmen.

7. Sonde nach einem der Ansprüche 1 bis 4, dadurch gekennzeichnet, daß sie zwei Gruppen von fluoreszierenden Lichtleitfasern (4, 46) umfaßt, wobei die durch die genannten Faserabschnitte von einer der Gruppen gebildete Einheit und die durch die genannten Faserabschnitte der anderen Gruppe gebildete Einheit die Platte aus schimmerndem Material einrahmen.

8. Sonde nach Anspruch 7, dadurch gekennzeichnet, daß die genannten Abschnitte von einer der Gruppen versetzt angeordnet sind gegenüber den Abschnitten der anderen Gruppe.

9. Sonde nach einem der Ansprüche 1 bis 8, dadurch gekennzeichnet, daß die Platte (2, 44) aus schimmerndem Material eine isotrope Struktur hat.

10. Sonde nach einem der Ansprüche 1 bis 8, dadurch gekennzeichnet, daß die Platte (50, 52) aus schimmerndem Material das sichtbare Licht leiten kann, das durch das schimmernde Material unter der Einwirkung der Strahlung emittiert wird, im wesentlichen senkrecht zu den Seiten der Platte.

11. Sonde nach Anspruch 10, dadurch gekennzeichnet, daß die Platte (50) aus schimmerndem Material eine Säulenstruktur hat, daß die Säulen senkrecht zu den Seiten der Platte ausgerichtet und zu parallelen Reihen angeordnet sind und fahig sind, das sichtbare, unter der Einwirkung der Strahlung durch das schimmernde Material emittierte Licht zu leiten, und dadurch, daß die genannten Abschnitte der Fasern parallel zu diesen Reihen und senkrecht zu den Säulen ausgerichtet sind.

12. Sonde nach einem der Ansprüche 1 bis 11, dadurch gekennzeichnet, daß das dichte schimmernde Material anorganisch ist.

13. Sonde nach Anspruch 12, dadurch gekennzeichnet, daß das dichte schimmernde Material ein Material auf Cäsiumiodidbasis ist.

14. Sonde nach einem der Ansprüche 1 bis 13, dadurch gekennzeichnet, daß die Dicke der Platte ausreichend gering ist, um eine gute Raumauflösung für die Sonde zu erzielen.

15. Sonde nach einem der Ansprüche 1 bis 13, dadurch gekennzeichnet, daß die Dicke der Platte im wesentlichen gleich dem Durchmesser der Lichtleitfasern ist, wobei die Raumauflösung der Sonde somit im wesentlichen gleich dem Durchmesser der Lichtleitfasern ist.

## Claims

1. Device for the detection of a beam of radiation of a given type chosen from among X-radiation, gamma radiation and radiation constituted by high energy electrons, said device comprising:
- at least one thin plate (2, 44, 50, 52) of a dense scintillating material, said plate having an adequate depth to stop most of the radiation which has penetrated the plate by the edge thereof,
- at least one group of fluorescent optical fibres (4, 46) excitable by the visible light emitted by the scintillating material under the impact of the radiation, said fibres having parallel, adjacent portions (6, 48) fixed to one of the two faces of the plate, the device permitting the location, along the edge of the plate, of the impact of the incident radiation patticles.

2. Device according to claim 1, characterized in that it also has beam collimating means (20), which can impose on the beam an orientation parallel to the plate and to said fibre portions, so that said beam penetrates the plate by the edge thereof.

3. Device according to claim 1, characterized in that it also has means (14) for the relative displacement of the plate with respect to the incident beam, as a result of the relative displacement the device forms a bidimensional detector.

4. Device according to claim 1, characterized in that it also has, for each fibre, a means (28) for detecting the fluorescence light produced and guided by said fibre when it is excited and electronic means for processing signals supplied by the detection means.

5. Device according to any one of the claims 1 to 4, characterized in that the other face of the plate is made reflecting or diffusing for the light emitted by the scintillating material under the impact of the radiation.

6. Device according to any one of the claims 1 to 4, characterized in that it has two thin scintillating material plates (2, 44) surrounding the assembly formed by said fibre portions (6).

7. Device according to any one of the claims 1 to 4, characterized in that it has two groups of optical fluorescent fibres (4, 46), the assembly formed by said fibre portions of one of the groups and the assembly formed by said fibre portions of the other group surrounding the scintillating material plate.

8. Device according to claim 7, characterized in that the said portions of one of the assemblies are staggered with respect to said portions of the other assembly.

9. Device according to any one of the claims 1 to 8, characterized in that the scintillating material plate (2, 44) has an isotropic structure.

10. Device according to any one of the claims 1 to 8, characterized in that the scintillating material plate (50, 52) is able to guide the visible light emitted by the scintillating material under the impact of the radiation, so as to be substantially perpendicular to the faces of the plate.

11. Device according to claim 10, characterized in that the scintillating material plate (50) has a pillar structure, in that the pillars are oriented perpendicular to the faces of the plate, are arranged in parallel rows and are able to guide the visible light emitted by the scintillating material under the impact of the radiation and in that said fibre portions are arranged parallel to these rows and perpendicular to the pillars.

12. Device according to any one of the claims 1 to 11, characterized in that the dense scintillating material is inorganic.

13. Device according to claim 12, characterized in that the dense scintillating material is based on cesium iodide.

14. Device according to any one of the claims 1 to 13, characterized in that the thickness of the plate is sufficiently small to have a good spatial resolution for the device.

15. Device according to any one of the claims 1 to 13, characterized in that the thickness of the plate is substantially equal to the diameter of the optical fibres, so that the spat ial resolution of the device is substantially equal to the diameter of the optical fibres.
